# EUROPEAN PATENT APPLICATION

(11) **EP 1 217 538 A1**
(43) Date of publication of application: **26.06.2002**
(21) Application number: 00128221.9
(22) Date of filing: 22.12.2000
(51) Int. Cl.: G06F 17/30

(54) **Client capability detection in a client and server system**

(71) Applicant: SUN MICROSYSTEMS, INC., Palo Alto, California 94303 (US)
(72) Inventor: Eilers, Bernd, 21107 Hamburg (DE); Laux, Thorsten O., 20099 Hamburg (DE)
(74) Representative: HOFFMANN - EITLE

(57) **Abstract**

In a data communication system (SYS) a client unit (CU) and a server (SERV) perform a data communication, in particular to provide the client unit (CU) with data from the server unit (SERV). The server unit (SERV) comprises a client characteristics determination unit (CC-DU) for determining client characteristic information (CCI) about the client unit (CU). For this purpose, an exploration request transmission unit (EXTX) sends a client characteristics exploration request (CC-RQ) to the client unit (CU) (S1), a client characteristics determination unit (CC-DU) in the client unit (CU) determines the relevant client characteristic information (S3) and a response message is transmitted back to the server unit (SERV) (S4, S5). Thus, the server unit (SERV) receives information about the client capabilities, for example about the preferences the user has set inside a browser program running on the client unit (CU). The client characteristics exploration request (CC-RQ) which is sent to the client side (CU) can contain an exploration processing program unit (EXP-PU) which is run on the client unit (CU). The server unit (SERV) can also order the execution of an exploration processing program unit (EXP-PU) residing on the client unit (CU) by unit of sending an exploration program execution request to the client unit (CU). The server unit and the client unit can be advantageously implemented in a JAVA environment.

## Description

### FIELD OF THE INVENTION

The invention relates to a server unit and a client unit of a data communication system in which the client unit is provided with content data from the server unit through some communication link. In particular, the invention desires to provide a mechanism by which the provision of the content data to the client unit is specifically adapted to the client unit characteristics, e.g. the processing capabilities or the set preferences at the client unit.

### BACKGROUND OF THE INVENTION

Computers have been conveniently used for a wide range of applications, e.g. ranging from simple editing of text documents to complex distributed processing applications involving a large number of possibly distributed data processing units and involving the transfer of data between the data processing units.

With the growing number of data processing units having access to computer networks such as to local area networks or world-wide networks, e.g. company-wide intranets or the Internet, a growing number of applications is offered which involve a plurality of data processing units. Such applications may be, for example, found in the field of home banking, office applications, remote e-mail applications, supercomputing applications or similar. In such data communication systems, high speed links, via permanent connections, circuit-switched connections or packet-switched connections, are used to exchange digital data at high speed (high bit-rates) such that even graphics data or data from moving images can be exchanged among the data processing units.

It is a typical feature of such data communication systems that it is not required that all participating data processing units have the same powerful processing capabilities. That is, a main computer having powerful computing facilities will serve a number of smaller sub-computers through one or more communication links. Since typically the smaller sub-computers are only assigned the task of making access to the main computer and to request the processing facilities or data from the main computer whilst the main computer serves the data on the small sub-computers, the main computer is often referred to as a server (or server unit) and the small sub-computers are referred to as clients (client units). In such a scenario a client may typically request the execution of an application program at the server and may receive a data processing result from the sever via the network or the communication link connecting the client unit and the server unit.

Furthermore, systems are known where a plurality of clients can connect to a portal for execution applications. A portal may be a large site in a network including a plurality of servers which provide a variety of services including, for example, office applications, searching functions, news functions, e-mail applications, discussion groups, on-line shopping and links to other sites on a network. A portal may thus be a general purpose site offering the capability to perform applications on behalf of a client or assisting a client in executing the application.

Generally, in a client and server or portal scenario the server may be a large computing device which has the resources to store and execute application programs which are used in providing service to a client. Since the application programs and sufficient computing power are generally available at the server side the client may be a data processing unit with less powerful computing resources functioning as an interface to receive user commands required for executing the desired application program in providing the requested service, i.e. to transmit commands from the client to the server, and further to receive and, for example, to display computation results from the server unit.

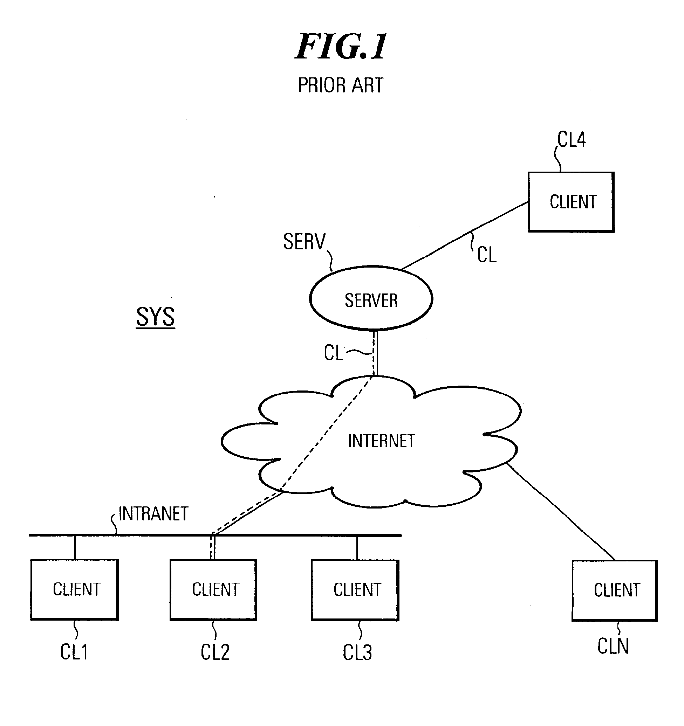

A typical data communication system SYS of the prior art is shown in Fig. 1. Here, a server unit SERV and client units CL1, CL2, CL3, CL4, ..., CLN communicate through communication links CL, possibly through an intranet and/or the Internet.

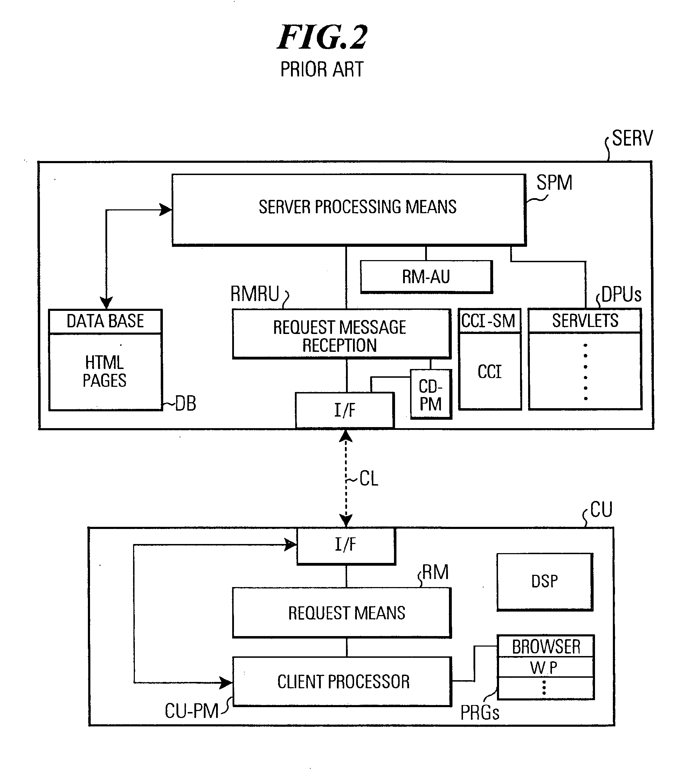

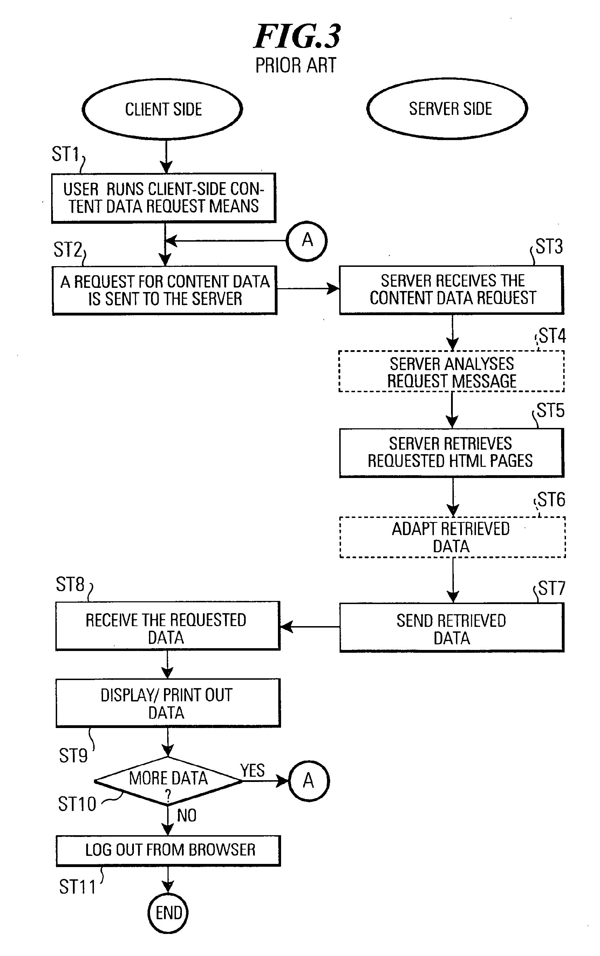

Fig. 2 shows a typical block diagram of a server unit SERV and a client unit CU in accordance with the prior art. The server unit SERV and the client unit CU communicate through a communication link CL connected to a respective interface I/F. Fig. 3 shows an example of operations performed by the client side and the server side for the typical scenario in Fig. 1.

For example, in case a user at a client side wishes to access a document from the server SERV, e.g. a web-page available at the server or another location, the user selects in operation ST1 one of the programs PRGs, e.g. a browser, which is run on a client processor CU-PM. When the user clicks on a particular place on the screen, a content data request unit RM sends a content data request to the server SERV in operation ST2. In the Internet protocol such a request message can typically be a HTTP message requesting the transfer of HTML-pages from a database DB located within the server SERV (or located elsewhere outside the server). The HTTP-request includes the URL from which the HTML-pages should be retrieved, and some header information.

After setting up the communication link CL between the client unit CU and the server unit SERV, a request message reception unit RMRU receives the content data request message HTTP in the operation ST3. Alternatively, the client unit CU can also request the execution of some processing programs DPU, so-called servlets, by the server unit SERV.

After the operation ST4, which is optional and will be explained hereinafter, in the operation ST5 the server processing unit SPM statically or dynamically retrieves the requested content data, e.g. the HTML-pages. In a static retrieval the server processing unit SPM merely accesses a local database DB and retrieves the HTML-pages. In a dynamic retrieval the server processing unit SPM can run additional programs, for example, the servlets in order to retrieve data from a remote site in a dynamic manner.

The operation ST6 is optional and will be explained hereinafter. In the operation ST7 the content data providing unit CD-PM of the server unit SERV provides through the communication link CL the retrieved content data to the client side. In the operation ST8 the content data is received on the client side and in the operation ST9 the user at the client side has the option to display or print out the transferred content data on a display DSP, on a disc or a printer. If the requested content data are web-pages (HTML-pages), typically complete data sets relating to one page are requested and retransferred to the client side. Therefore, if in the operation ST10 the user requires further pages from the server, the process continues with the operation ST2. If no further pages are required, the link is closed, for example, by stopping the browser in the operation ST10. Thus, display frames for local visualization at the client side can be transmitted from the server to the client unit and the user can view the desired HTML-pages.

Whilst in the above description it has been assumed that the request unit RM merely sends a content data request HTTP to the server unit SERV, of course, more complex operation commands can be transmitted to the server side in a similar manner. For example, in case the client wishes to scroll through a document, a corresponding input command is given via the browser and is transmitted via the communication link to the server. In turn, the server prepares a corresponding display content for transfer to the client in order to enable the client to locally visualize the changed display content. Similarly, in case the user wishes to edit the document, respective commands could be transmitted from the client to the server and accordingly be processed at the server. Changed display contents (content data) are then again transmitted to the client for local visualization.

However, it is also possible, that not only the server has the necessary resources to provide a desired service, but a client may already have the required resources for providing the service such as rendering operations or editing a data file. Corresponding application programs may thus be available at both the client side, e.g. an applet, and the server side, e.g. a servlet, for performing a desired operation, i.e. providing a desired service. Such programs are also available as one of the programs PRGs shown on the client side in Fig. 2.

Since on the client side CU different browsers or different processing programs PRGs can be executed, the server side SERV must have knowledge about what type of program is run in order to determine in which manner the retrieved HTML-pages should be provided back to the client unit CU. This is the purpose of the operations ST4, ST6 shown in Fig. 3. Conventionally, the server analyses the request message in the operation ST4 in order to retrieve, for example, the browser identification from the HTTP-message. For example, the server unit SERV can in the operation ST4 detect that the client unit CU is a WAP mobile telephone and may thus conclude that this type of client unit CU has no graphics facilities such that only non-graphics data is provided back to such a client unit CU, i.e. the server unit SERV performs a partial adaptation of retrieved data in the operation ST6.

However, in the prior art only a minimum of information can be obtained by analysing the request message. In principle, the conventional information which can be obtained is only the type of browser and generally no other information is transferred, in particular no information about the settings of the programs etc. That is, although the above described operations ST4, ST6 in Fig. 3 provide a certain amount of adaptation to the client unit CU, there are a plurality of options or preferences which the user can set when executing the browser program on the client side. Furthermore, the client unit itself may have certain processing facilities or processing capabilities about which information is not generally and automatically sent to the server unit in the request messages HTTP. For example, the client unit CU may have such client characteristics of being provided with a powerful colour display such that more sophisticated graphics data can be provided to the client unit CU. That is, the client unit CU may be further comprising a plurality of client characteristics, i.e. client unit specific information representing a characteristic information of the processing capabilities of the client unit and client-set information set by the client unit during the running of content data requesting unit RM, with the disadvantage that such client characteristic information is not detectable merely from a request message conventionally sent from the client unit CU to the server unit SERV. That is, since the same entry URL is offered to all client units, there is the desire to find out what the client is capable of and what the user has set as preferences, for example, inside the browser for creating results.

That is, it would generally be desirable to have available in the server unit SERV more information about the specific capabilities of the client unit CU, i.e. also the server unit SERV should know about the client characteristics more than just associating some characteristics CCF from the HTTP request message.

### SUMMARY OF THE INVENTION

It is therefore desirable to provide an improved client unit, server unit and method for exchanging data between the server unit and the client unit in a data communication system which allow the server unit to have available more information about the client characteristics on one or more client units.

The invention as recited in the independent claims allows the server unit to gain more information about the capabilities of the client unit via an exploration procedure, e.g. by prompting the client unit to reveal its client characteristics (processing capabilities and/or client-set preferences) to the server unit.

By giving the server unit the option to explore the client unit with respect to its client characteristics, client capabilities will be available in the server unit and can thus be processed, evaluated and used within the server framework.

Thus, a server unit of a data communication system in which one or more client units communicate with the server unit for being provided with content data from the server unit, comprises a client characteristics determination unit for determining client characteristic information about one or more client units including an exploration request transmission unit for sending a client characteristics exploration request to one or more client units; and a response message reception unit for receiving a client characteristics response message which includes client characteristics information about the client unit and is sent by the one or more clients units in response to the client characteristics exploration request.

The client characteristics determination unit of the server unit may advantageously comprise a client characteristics information storage unit for storing for said one or more client units the client characteristics information contained in the respective response message.

The server unit may further comprise a request message receiving unit for receiving from a client unit a content data request message requesting the transfer of content data from the server unit; and a content data providing unit for collecting the content data as indicated in the request message and for providing said collected content data processed in accordance with the client characteristics information to the client unit.

The client characteristics determination unit of the server unit may further comprise a message analysing unit for determining client characteristic information by analysing a message sent from said one or more client units, wherein said client characteristics information storage unit also stores said client characteristics information obtained by said message analysing unit.

Said client characteristics exploration request sent to the respective client unit can comprise an exploration processing program unit to be implemented as part of or together with a client-side content data requesting unit on the client unit side.

Advantageously the exploration processing program unit sent as the client characteristics exploration request can be a SCRIPT language program which can be sent to the client unit as part of a HTML-page because the browser unit normally has a scripting unit such that the browser can execute the sent SCRIPT language program.

Advantageously, said SCRIPT language program is a JAVAScript program or a VirtualBasicScript program sent from the server unit to the client unit together with content data in the form of HTTM pages.

In this case, the is no need to actually transfer a complete exploration processing program unit but only an execution request command for either directly executing the resident program on the client side or for indicating the loading as well as the execution of a specific program. These specific program units then provide back to the server unit the desired client characteristics information.

Further advantageously, if the client unit and the server unit are JAVA-based processing units, the exploration processing program unit to be executed can be a plug-in or an applet on the client unit.

Advantageously, the client characteristics information can comprise client unit specific information representing characteristic information of the processing capabilities of said client unit.

The client-set information can include one or more selected from the group consisting of the set language, the set graphics mode, the sound reception mode, the help mode, the character type and the graphics colour.

The client unit specific information include one or more selected from the group consisting of the WML or HTML capabilities of the client unit; screen size; hardware terminal type; terminal software; OS name and version; information about the available software (e.g. browsers); supported script language; installed plug-ins and running applets.

Thus, a method for providing content data from a server unit to one or more client units communicating with the server unit through a data communication system, comprises the operations of determining on the server unit side client characteristic information about one or more client units by sending from said server unit a client characteristics exploration request to one or more client units; and receiving, in response to the client characteristics exploration request, at said server unit a client characteristics response message containing the requested client characteristic information.

A computer program product stored on a computer readable storage medium comprises code units adapted to carry out on the server side the aforementioned operations. Furthermore, a program has instructions adapted to carry out at the server side the aforementioned operations. Furthermore, a data carrier for a server side has computer-readable storage code embodied therein comprising units adapted for determining on the server unit side client characteristic information about one or more client units including a units adapted for sending a client characteristics exploration request to one or more client units; and a units adapted for receiving a client characteristics response message which includes client characteristics information about the client unit and is sent by the one or more clients units in response to the client characteristics exploration request.

Thus, a client unit for communicating with a server unit of a data communication system for being provided with content data from the server unit, comprises a client characteristics exploration request receiving unit for receiving a client characteristics exploration request; a client characteristics determination unit for determining client characteristic information in response to said received client characteristics exploration request; a response message transmitting unit for transmitting a client characteristics response message in response to said client characteristics exploration request to the server unit.

Advantageously, the client unit comprises a content data requesting unit for transmitting a content data request message requesting the transfer of content data to the client unit; and a client unit processing unit for receiving from the server unit the content data as indicated in the request message and as processed in the server unit in accordance with the client characteristics as contained in the transmitted client characteristics response message.

Further advantageously, said client characteristics determination unit comprises an exploration processing program execution unit for an exploration processing program unit for collecting the client characteristics, wherein said response message transmitting unit is adapted for transmitting said client characteristics response message including said collected client characteristics to the server unit.

Thus, a method for providing content data from a server unit to one or more client units communicating with the server unit through a data communication system, comprising the following operations: receiving on a client unit side a client characteristics exploration request; determining at the client unit side client characteristic information in response to said received client characteristics exploration request; transmitting to said server unit a client characteristics response message including the determined client characteristic information in response to said client characteristics exploration request.

Furthermore, a computer program product stored on a computer-readable storage medium to be executed on a client side comprises code unit adapted to carry out respectively all the operations mentioned before.

A program has instructions adapted to carry out on the client side the aforementioned operations.

A data carrier for a client side having computer-readable storage unit embodied therein comprises a unit for determining at the client unit side client characteristic information in response to said received client characteristics exploration request; and a unit for transmitting a client characteristics response message in response to said client characteristics exploration request.

A data communication system comprises one or more server units and one or more client units as mentioned before which communicate through a communication link.

A method for providing content data from a server unit to one or more client units communicating with the server unit through a data communication system, comprises the operations of: transmitting a request message requesting the transfer of content data to the server unit; receiving at the server unit from the client unit said request message requesting the transfer of content data from the server unit; sending from said server unit a client characteristics exploration request to one or more client units; and receiving on a client unit side said client characteristics exploration request; determining at the client unit side client characteristic information in response to said received client characteristics exploration request; transmitting to said server unit a client characteristics response message including the determined client characteristic information in response to said client characteristics exploration request; receiving in response to the client characteristics exploration request, at said server unit the client characteristics response message containing the requested client characteristic information; storing for said one or more client units the client characteristics information contained in the respective response message in a client characteristics information storage unit; collecting at said server unit the content data as indicated in the request message and processing the collected content data in accordance with the client characteristics information as contained in the client characteristics information storage unit; and transmitting the processed content data to said one or more client units.

Further advantageous features and improvements of the inventions can be taken from further dependent claims. Furthermore, the client unit, the server unit and the data communication system may comprise features which have been separately described and claimed in the specification and in the claims.

### BRIEF DESCRIPTION OF THE DRAWINGS

In the drawings, the same or similar reference numerals denote the same or similar steps or parts throughout.
- Fig. 1: shows a data communication system in which the serer and a plurality of clients perform a data communication in accordance with the prior art.
- Fig. 2: shows a block diagram of a client unit and a server unit in accordance with the prior art;
- Fig. 3: shows a client/server communication when the client requests the transfer of content data from the server, in accordance with the prior art;
- Fig. 4: shows a block diagram of a server unit and a client unit in accordance with an embodiment of the invention;
- Fig. 5: shows a flow chart of an embodiment of the client characteristics exploration procedure of the invention;
- Fig. 6: shows a flow chart when requesting data from the server unit together with the client characteristics exploration procedure shown in Fig. 5;
- Fig. 7: shows an embodiment of the client characteristics exploration procedure in accordance with the invention, in particular showing the sending of a program unit from the server to the client;
- Fig. 8: shows another embodiment of the client characteristics exploration procedure in accordance with the invention, showing in particular the sending of an exploration program execution request from the server to the client.

### DETAILED DESCRIPTION OF THE PREFERREND EMBODIMENTS

Hereinafter, embodiments of the invention will be described with reference to the drawings. Whilst hereinafter often reference is made to special messages exchanges between a client unit and a server unit in an internet application example where web-pages are retrieved from a server unit in a JAVA environment, it should be understood that the invention is not limited to the special JAVA data communication implementation.

### CONFIGURATION OF THE SERVER AND THE CLIENT

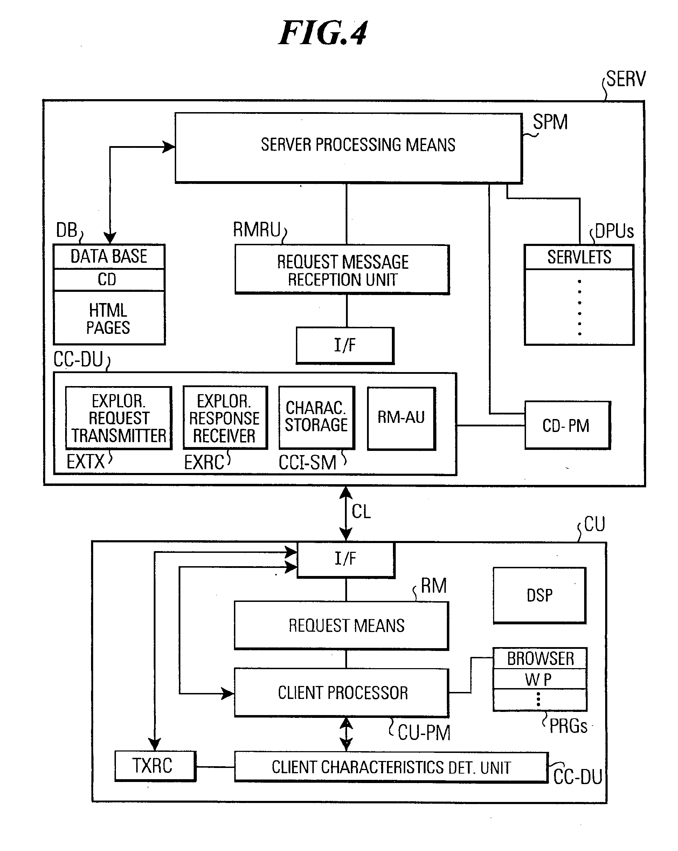

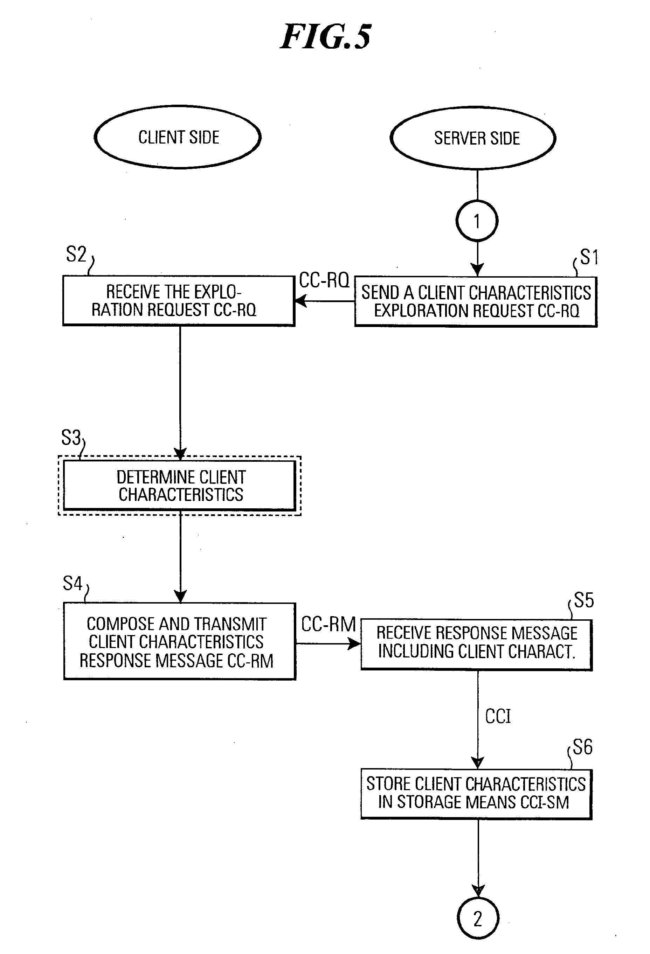

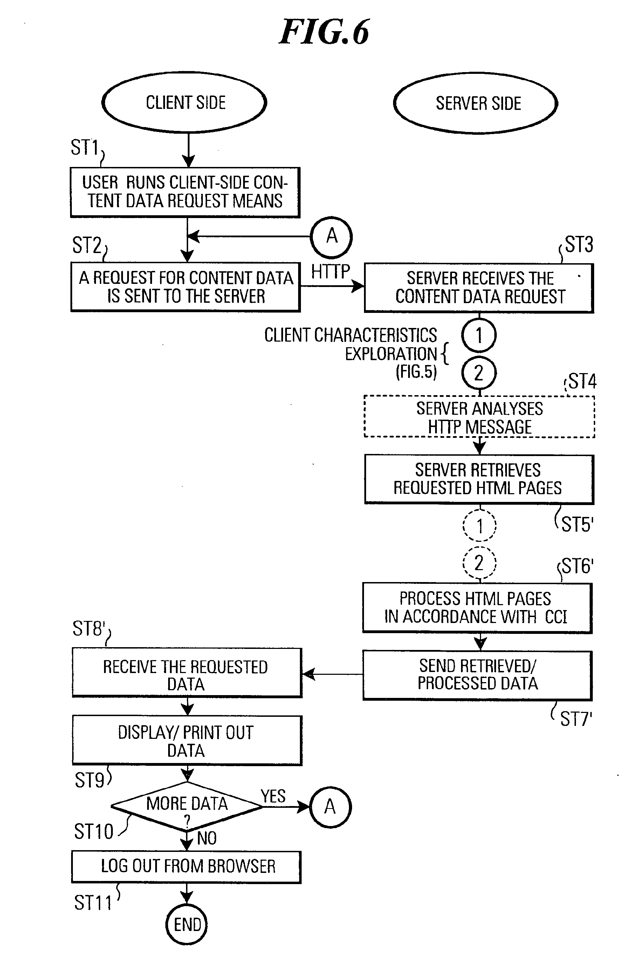

A first embodiment of the invention will be described with reference to Fig. 4 showing a server unit SERV and a client unit CU and Fig. 5 showing operations when communicating messages between the server unit SERV and the client unit CU.

In Fig. 4, a server unit SERV of a data communication system SYS (for example shown in Fig. 1) communicates with a client unit CU via a communication link CL. As explained before, one of the basic operations of the communication is to provide the client unit CU with content data CD from the server unit SERV.

In addition to the server processing unit SPM, the data base DB, the request message reception unit RMRU, the data processing units DPU and the interface I/F, already explained and described with reference to Fig. 2, the server unit SERV in Fig. 4 comprises a client characteristics determination unit CC-DU for determining client characteristic information CCI about one or more client units CU.

The client characteristics determination unit CC-DU comprises an exploration request transmission unit EXTX for sending a client characteristics exploration message CC-RQ to one or more client units CU. Furthermore, the client characteristics determination unit CC-DU comprises a response message reception unit EXRC for receiving a client characteristics response message CC-RM which includes client characteristics information CCI about the client unit CU and which is sent by the one or more client units CU in response to the client characteristics exploration request CC-RQ as transmitted by the exploration request transmission unit EXTX.

The client unit CU shown in Fig. 4 comprises, in addition to the request unit RM, the client processor CU-PM, the display DSP and the application programs PRGs already shown and described with reference to Fig. 2, a client characteristics determination unit CC-DM for the client-side and a transmission/reception unit TXRC. The transmission/reception TXRC thus acts as a client characteristics exploration request receiving unit and a response message transmitting unit.

Thus, the client unit CU shown in Fig. 4 has a client characteristics exploration request receiving unit TXRC adapted for receiving the client characteristics exploration request CC-RQ, a client characteristics determination unit CC-DU for determining a client characteristic information CCI in response to said received client characteristics exploration request CC-RQ, and a response message transmitting unit TXRC for transmitting the client characteristics response message CC-RM which is being transmitted to the server unit SERV as response to the client characteristics exploration request CC-RQ.

Thus, the client unit CU shown in Fig. 4 provides in response to a request message from the server unit client characteristics information CCI indicating the desired client characteristics to the server unit. It may be noted that the client characteristics exploration message can in the simplest case be merely a request to transfer all the client characteristics available on the client-side to the server unit. The client characteristics determination unit CC-DU on the client-side then provides all the available client characteristics to the server unit SERV. However, it is also possible that the client characteristics exploration request CC-RQ contains specific parameters indicating specific client characteristics to be explored, in which case the client characteristics determination unit CC-DU of the client side will provide specifically desired client characteristics to the server unit SERV.

### CLIENT CHARACTERISTICS EXPLORATION PROCEDURE

Fig. 5 shows an embodiment of the communication method between the server unit SERV and the client unit CU shown in Fig. 4.

The determination operation on the server unit SERV side for determining client characteristic information CCI about one or more client units CU starts with the operation S1 where from the server unit SERV a client characteristics exploration request CC-RQ is transmitted to one or more client units CU. Whilst Fig. 5 shows only the transmission to a single client side, it should be understood that in accordance with another embodiment the request message CC-RQ can also be sent to several client units.

After transmitting the client characteristics exploration request CC-RQ by the exploration request transmission unit EX-TX on the server unit SERV, in operation S2 the client characteristics exploration request CC-RQ is received on the clients side by the client characteristics exploration request receiving unit TXRX.

In the operation S3 the client characteristics determination unit CC-DU on the client side determines client characteristic information CCI in response to said received client characteristics exploration request CC-RQ. As explained above, in one embodiment the client characteristics exploration request can simply be a request to provide all the client characteristics available on the client side to the server side. According to another embodiment the request can also contain specific parameters or indications to instruct the client side characteristics determination unit CC-DU to collect information about specific client characteristics.

The requested client characteristics can for example be a client-set information (CS-INFO) consisting of the set language und/or the set graphics mode and/or the sound reception mode and/or the help mode and/or the character type and/or the graphics colour and/or some other information from which it is detecable what the client unit is capable of and/or what the user has set as preferences inside the browser for creating results.

In the operation S4 a client characteristics response message CC-RM, for example containing the above mentioned information, is composed by incorporating in a transmission message information about the determined client characteristics. Furthermore, in the operation S4 the response message transmission unit TXRC transmits to the server unit SERV the client characteristics response message CC-RM including the determined client characteristics information CCI. In the operation S5 the client characteristics response message
CC-RM containing the requested client characteristics information CCI is received by the response message reception unit EXRC of the client characteristics determination unit CC-DU on the server side SERV.

### PROCESSING OF RETRIEVED DATA WITH CLIENT CHARACTERISTICS

The server unit SERV can actively explore the one or more client units by sending and receiving the request and response messages CC-RQ, CC-RQ and CC-RM, respectively. Thus, after executing the operation S5 on the server side, the server unit SERV has full information or a full knowledge of the client characteristics. Therefore, the server unit SERV has now available information indicating what a client is capable of and, for example, what the user has set as preferences inside the browser for creating results. Now, this client characteristics information can be processed, evaluated and used within the server framework.

For example, in accordance with one embodiment of the server unit SERV, the client characteristics determination unit CC-DU comprises a client characteristics information storage unit CC-SM for storing for said one or more explored clients CU the respective client characteristics information CCI contained in the respective response message CC-RM. Therefore, according to one embodiment of the method in Fig. 5, the operation S5 may be followed by an operation S6, in which the client characteristics information CCI is stored in the storage unit CC-SM. Thus, the server processing unit SPM can perform some processing evaluation or analysis of the client characteristics information CCI stored in the storage unit CCI-SM.

According to one embodiment the server unit SERV can for example use the client characteristics information CCI in a scenario when a client unit has requested the provision and retrieval of content data from the server unit SERV. This embodiment is illustrated with the flowchart of Fig. 6 where in accordance with a first embodiment the client characteristics exploration procedure is inserted at points ①, ②. In accordance with another embodiment the client characteristics exploration procedure can also be inserted at a location between steps ST5', ST6', as indicated with the dashed lines in Fig. 6. As may be appreciated, Fig. 6 is similar to Fig. 3 with respect to steps ST1 - ST4 and ST8 - ST11. That is, with respect to the requesting of content data by a client unit CU from a server unit SERV, the same operation and units as described with reference to Fig. 2 and Fig. 3 are used. However, due to the client characteristics exploration procedure ① - ②, the operations ST5', ST6', ST7' are different in the present embodiment.

In the first embodiment in Fig. 6 (client characteristics exploration procedure inserted between operations ST3, ST4), the server unit SERV has after operation ST3 received a request message HTTP requesting the transfer of content data CD to the server unit SERV. As explained before, this sending of the request message HTTP is performed by the content data requesting unit RM of the client unit CU. After retrieving or collecting the content data CD as indicated in the request message HTTP by the data content providing unit CD-PM in the operation ST5', the data content providing unit CD-PM can also decide to process the collected content data CD in accordance with the client characteristics information CCI as contained in the client characteristics storage unit CCI-SM, in the operation ST6'. For example, if the enquiry response message contains 2 parameters, one indicating the type of client device and the other one indicating the type of set graphics mode, e.g. large screen, small screen etc., then such a processing could for example result in a more specfic information "the device is a device manufactured by XXX company" or "the device generally conforms to YYY standard".

In the operation ST7' the data content providing unit CD-PM therefore provides to the client side the collected content data CD as processed in accordance with the client characteristics information CCI, in the operation ST7'. Therefore, in the operation ST8' the client unit processing unit (formed by the client processor CU-PM) receives the processed content data CD from the server side. The processing can for example be the following. If the analysed and processed client characteristics information indicates "the client device generally conforms with YYY standard", then the server unit SERV can decide that it is appropriate to only retrieve pages (content data) relating to "YYY standard" pages. Alternatively, the server unit (SERV) may decide that it can in fact nonetheless read data of "ZZZ standard" but that the retrieved data must first be processed (converted) from ZZZ to YYY standard.

According to one embodiment, the client characteristics information CCI used for processing the retrieved data (HTML pages) in the operation ST6' is the client characteristics information which has been retrieved in the client characteristics exploration procedure ① - ② in Fig. 5. However, as was explained above with reference to Fig. 3, the client characteristics determination unit CC-DU can also comprise a request message analysing unit RM-AU which can detect a minimum client characteristic also from analysing for example the HTTP request message. Therefore, in accordance with another embodiment the processing of the retrieved data in the operation ST6' can be also made on the basis of client characteristics information CCI obtained through the exploration procedure ① - ② in combination with the client characteristics information CCI obtained from analysing a request message or in fact any other command or other type of message sent by the client, in the operation ST4. Both types of client characteristics information CCI are stored in the client characteristics storage unit CC-SM. The analysis of the HTTP message can for example be performed by analysing a header information part of the HTTP request message (i.e. the URL). For example, the request message may be analysed to result in a client characteristics of "client unit runs browser XYZ" whilst the additional client characteristics retrieved with the enquiry procedure indicate "browser has set the option: no colour data", then the two information can be used in combination in order to result in the sending of data specially adapted (retrieved and/or modified) to the XYZ type client unit and without color. Thus, it is advantageous to evaluate the request message characteristics together with the enquiry procedure characteristics.

Although herebefore it has been described that the request message which is analysed in the operation ST4 is the request message for requesting the transfer of content data CD, for example a HTTP request message, according to another embodiment client characteristic information CCI can be obtained by the request message analysing unit RM-AU by analysing any type of message sent from the one or more clients units to the server unit SERV. As explained above, the client unit CU of course provides a plurality of different types of messages to the server unit SERV, e.g. control or command messages. Therefore, also these types of messages can be analysed in the operation ST4 and can be used alone or in combination with other client characteristic information CCI stored in the client characteristic storage unit CCI-SM in the processing operation ST6'.

As was explained above, preferably the client characteristics exploration procedure of Fig. 5 is inserted between the operations ST3, ST4 in Fig. 6. This has the advantage that the data content providing unit CD-PM can already make a preselection (filter) of some HTML pages when collecting the data in the operation ST5'. That is, according to the client characteristics CCI the content data providing unit CD-PM can decide on the appropriate location for HTML pages to be retrieved or can inhibit the retrieval of HTML pages if the client unit does not have processing capabilities suitable for a particular kind of data. For example, if the result of the client characteristics exploration procedure is that the client unit CU does not support an appropriate graphics mode, then it is rather pointless to retrieve the HTML graphics pages because there is no sense in providing this data back to the client unit. Therefore, by inserting the client characteristics exploration procedure before the operation ST4, this allows to use the processing and computing power of the server unit SERV only for such type of data which can later on also be handled by the client unit CU. However, in principle the client characteristics exploration procedure of Fig. 5 can be located anywhere before the operation ST7'.

### CLIENT CHARACTERISTICS DETERMINATION

As explained above, according to one embodiment the client characteristics exploration request CC-RQ can be a request instructing the client unit CU to provide all client characteristics possible. In this case, only a request is made. However, in accordance with another embodiment the client characteristics exploration request CC-RQ contains one or more client exploration parameters EXP-PARA indicating the characteristics of the client unit CU to be explored, wherein the client characteristics response message CC-RM contains the client characteristics information CCI indicated by the client exploration parameters EXP-PARA. In this manner the client characteristics determination unit CC-DU can pre-specify that it wants to obtain an information about specific client characteristics. For example, if the data content providing unit CD-PM has detected during a retrieval of HTML data that some specific client characteristic will be necessary for processing this type of data, for example moving images, then the client characteristics exploration procedure (Fig. 5) may be carried out, for example between operations ST5' and ST6', in order to explore a specific client characteristic regarding the support for moving images. If the response message CC-RM then indicates that this specific of client characteristic is missing (not supported), there is no need for transferring this type of data to the client unit CU. Hereinafter, some further embodiments will be described how the client characteristics determination in the operation S3 in Fig. 5 can be carried out.

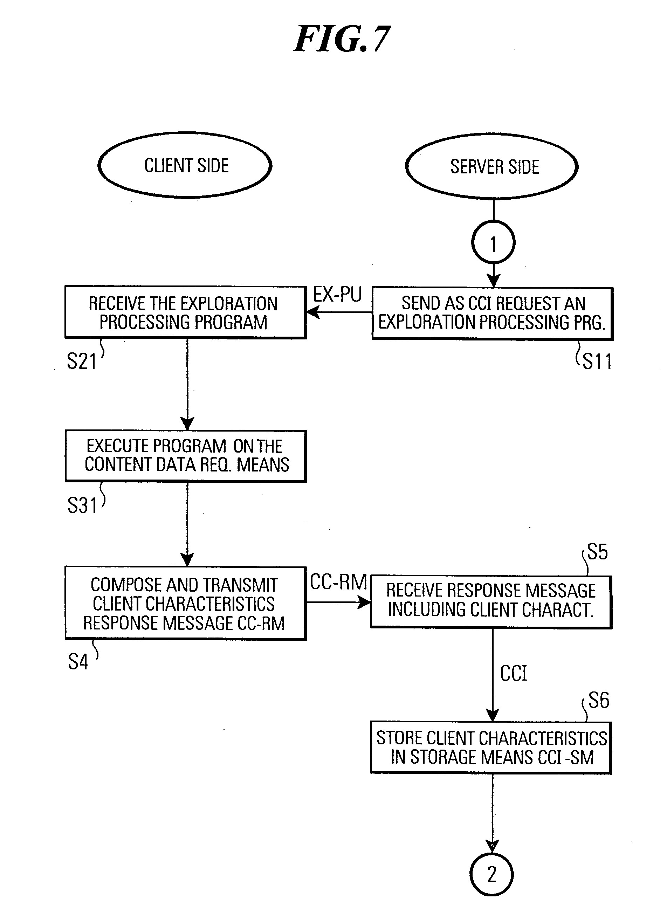

According to an embodiment shown in Fig. 7, the exploration request transmission unit EXTX sends to the respective client unit CU as said client characteristics exploration request CC-RQ an exploration processing program unit EXP-PU in the operation S11. In the operation S21 the exploration processing programming unit EXP-PU is received. According to this embodiment, the client unit CU comprises in the client characteristics determination unit CC-DU an exploration processing program execution unit constituted by the client processor CU-PM. In the operation S31 this exploration processing program execution unit CU-PM executes the received exploration processing program unit EXP-PU for collecting the devised client characteristics in the operation S31. Similarly as in Fig. 5, the collected client characteristics are then composed into a response message CC-RM and are transferred to the server side in the operations S4 and S5. Thus, the transmission and the execution of an explorer processing program acts as a kind of processing program for spying on the client unit to extract its client characteristics. One example should illustrate this.

Many server and client units nowadays are configured to run browser programs (data content requesting unit) which use SCRIPT language programs. This being the case, the browser program has a scripting unit and when the server sends to the client the SCRIPT program together with a HTML page which includes this script code, the included script code can immediately be run by the scripting unit on the browser program. An example of such script language programs is the JAVAScript program language or the VirtualBasicScriptProgram language which can be sent together with content data in the form of HTML pages to the client unit CU. The common characteristics of all these types of SCRIPT programs is that they can be immediately run after the HTML page is transferred to the client unit.

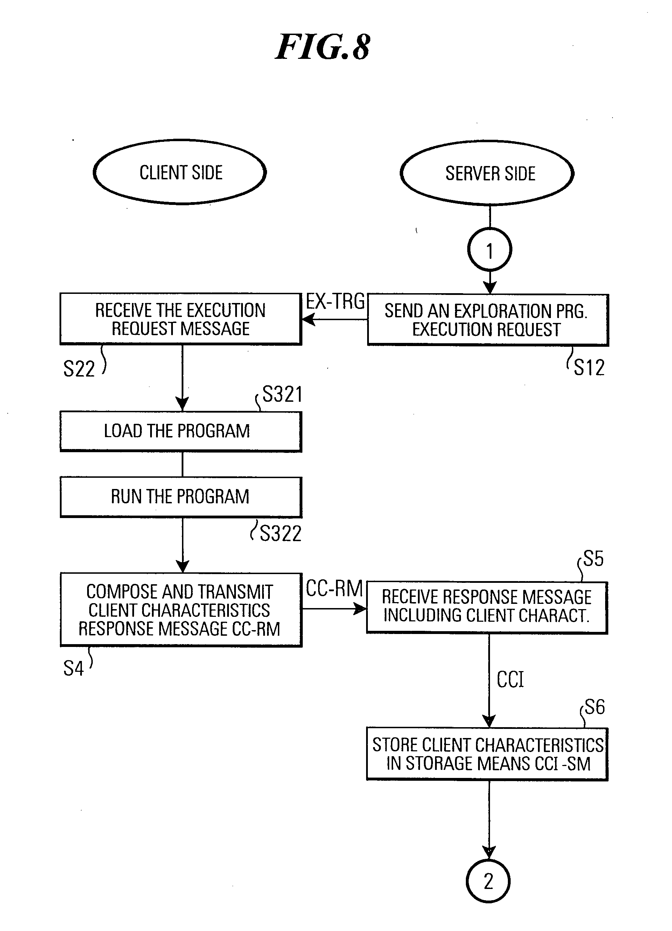

According to another embodiment, as shown in Fig. 8, the client characteristics exploration request CC-RQ sent by the exploration request transmission unit EXPX in the operation S12 is an exploration processing program unit execution message EX-TRG. That is, rather than transmitting a complete programming unit, the request CC-RQ can merely indicate the execution of a desired program residing at the client side. Therefore, in the operation S321 an exploration processing program unit indicated by the execution request EX-TRG is loaded in the client unit CU and in the operation S322 the loaded exploration processing program unit in the client unit CU is started in response to the execution message from the server unit SERV. Of course, when the program has already been loaded in the client unit CU the operation S321 can be omitted. The operations S4, S5, S6 in Fig. 8 again correspond to the corresponding operations in Fig. 5.

An example should illustrate how the exploration with transmitting merely an exploration program execution request can be carried out. Typically, on a browser there is the option to use so-called plug-in programs with which the browser capabilities can be expanded. If such a plug-in has already been loaded when running the browser, then the execution message will merely trigger the execution of this expansion plug-in program. One example of such a plug-in is the RVP plug-in made by Sun Microsystems, Hamburg as described in the European Patent Application No. 00 100 739.2 filed during August 2000 at the European Patent Office.

Another example of an exploration processing program unit triggered for execution with the transmitted execution request EX-TRG is a so-called applet which is a typical JAVA application program running on the client unit CU. Therefore, the JAVAScript program, the plug-in and/or the applets program units can be used for exploring in the client unit CU the client characteristics to be transferred to the server unit SERV.

Of course, a skilled person will understand that there are a great variety of program units for exploring different types of client characteristics. For example, one exploration processing unit may just explore the hardware configuration of the client unit CU and provide the hardware configuration as client characteristics to the server unit SERV. Many different types of exploration processing units can be transferred to and are executable in the client unit CU depending on the desired client characteristics information. As another example, an exploration processing unit may just explore the preferences or options set by the user on the browser program (content data requesting unit) when the browser program is executed. The type of processing and the type of program may be dependent on the desired client characteristics to be explored.

Generally, the client characteristics information CCI can comprise client-set information set by the client unit CU during the running of the content data requesting unit RM, or client unit specific information representing client characteristics information of the processing capabilities of the client unit CU. An example of the first category is the aforementioned setting of browser preferences. An example of the second category is the aforementioned hardware configuration.

According to further embodiments of the invention the client-set information includes one or more selected from the group consisting of the set language, the set graphics mode, the sound reception mode, the help mode, the character type and/or the graphics color. According to another embodiment the client unit specific information includes one or more selected from the group consisting of the WML, WAP or HTML capabilities of the client unit, the screen size, the hardware terminal type, the terminal software, the OS name and version, information about the available software, supported script language, installed plug-ins and running applets. A skilled person can derive many other client characteristics which may be useful to explore and to transfer to the server unit on the basis of the teachings herein.

Furthermore, it should be noted that the client unit SERV can be one or more selected from the group consisting of a JAVAMACHINE, a T-ONLINE client unit, a personal computer, a mobile UMTS telephone, a car navigation system and a laptop computer. Furthermore, the server unit SERV may be also a JAVAMACHINE or a T-ONLINE server. As explained above, preferably the server unit and the client unit comprise processing unit based on JAVA. Furthermore, it should be noted that the above described operations may at least partially be performed in hardware or software.

While specific sequences of operations were described in connection with the above embodiments, it should also be noted that the above outlined sequences of operations may be varied. Furthermore, it should be noted that operations which have been separately described and illustrated in the figures and the specification and have been claimed separately in the claims may be combined separately.

### SOFTWARE/HARDWARE EMBODIMENTS

Furthermore, the features and the processing steps of the above described embodiments may be realized by dedicated hardware or may be realized as programs including code instructions executed on data processing units. It is further possible that parts of the above processing operations are carried out in hardware, whereas other processing operations are carried out using software.

It is further noted that a computer program product stored on a computer readable storage medium can comprise code units or code sections adapted to carry out on a server side or on the client side respectively the operations described above.

A computer program can have instructions adapted to carry out at a server side or a client side the above described operations. Furthermore, a data carrier for a server side or the client side has a computer readable storage code embodied therein which carries out the respective above described operations and units in the server and the client.

A computer readable medium can be a magnetic or optical or other tangible medium on which a program is recorded, but can also be a signal, e.g. analog or digital, electromagnetic or optical, in which the program is embodied for transmission.

### FURTHER EMBODIMENTS (CODE SECTIONS)

According to other embodiments a server unit may be realized with code sections having instructions as follows:
1) A server unit of a data communication system in which one or more client units communicate with the server unit for being provided with content data from the server unit, comprising:
   a code section containing instructions to determine client characteristic information about one or more client units including
      a code section containing instructions for sending a client characteristics exploration request to one or more client units; and
      a code section containing instructions to receive a client characteristics response message which includes client characteristics information about the client unit and is sent by the one or more clients units in response to the client characteristics exploration request.
2) A server unit according to item 1), wherein said code section containing instructions to determine client characteristics further comprises a code section containing instructions for storing for said one or more client units the client characteristics information contained in the respective response message.
3) A server unit according to item 1), further comprising a code section containing instructions to receive from a client unit a content data request message requesting the transfer of content data from the server unit; and
   a code section containing instructions to provide and to collect the content data as indicated in the request message and for providing said collected content data processed in accordance with the client characteristics information to the third unit.
4) A server unit according to item 2), further comprising a code section containing instructions to receive from a client unit a request message requesting the transfer of content data from the server unit; and
   a code section containing instructions to collect the content data as indicated in the request message and to provide said collected content data processed in accordance with the client characteristics information as contained in the code section containing instructions to store client characteristics information to said one or more client units.
5) A server unit according to item 1), wherein said code section containing instructions to determine client characteristics further includes:
   a code section containing instructions to determine client characteristic information by analysing a message sent from said one or more client units; wherein
   said code section containing instructions to store client characteristics information also stores said client characteristics information obtained by said code section containing instructions to determine client characteristic information by analysing a message sent from said one or more client units.
6) A server unit according to item 5), further comprising a code section containing instructions to receive from a client unit a content data request message requesting the transfer of content data from the server unit; and
   said code section containing instructions to determine client characteristic information by analysing a message sent from said one or more client units also contains a code section with instructions to analyse said request message.
7) A server unit according to item 1), wherein said client characteristics exploration request contains one or more client exploration parameters indicating the characteristic of the client unit to be explored wherein said client characteristics response message contains the client characteristics information indicated by said client exploration parameters.
8) A server unit according to item 1), wherein said client characteristics exploration request sent to the respective client unit comprises an exploration code section containing instructions to explore client characteristics to be implemented as part of or together with a client-side code section containing instructions to request content data on the client unit side.
9) A server unit according to item 8), wherein said exploration code section containing instructions to explore client characteristics is a SCRIPT language program.
10) A server unit according to item 9), wherein said SCRIPT language program is a JAVAScript program or a VirtualBasicScript program sent from the server unit (SERV) to the client unit together with content data in the form of HTML pages.
11) A server unit according to item 1), wherein said client characteristics exploration request sent to the respective client unit is an exploration processing program unit execution message.
12) A server unit according to item 11), wherein said exploration processing program unit execution message indicates as a code section containing instructions to explore client characteristics to be executed a plug-in or an applet on the client unit.
13) A server unit according to item 1), wherein said data communication system is the Internet, and said server unit is a server connected to the Internet.
14) A server unit according to item 1), wherein said data communication system is an Intranet connected to Internet, and said server unit is a server connected to the Internet through the Intranet.
15) A server unit according to item 1) and item 6), wherein said request message is a HTTP request message from a browser program of a client unit to said server unit.
16) A server unit according to item 6) and item 13), wherein said code section containing instructions to analyse a request message is adapted to analyse a Header information part of said HTTP request message.
17) A server unit according to item 1), wherein said client characteristics information comprises client-set information set by the client unit during the running of a code section containing instructions to request content data.
18) A server unit according to item 1), wherein said client characteristics information comprises client unit specific information representing characteristic information of the processing capabilities of said client unit.
19) A server unit according to item 1), wherein said server unit comprises a JAVA® based processor (PU).
20) A server unit according to item 17), wherein said client-set information includes one or more selected from the group consisting of: the set language, the set graphics mode, the sound reception mode, the help mode, the character type and the graphics colour.
21) A server unit according to item 18), wherein said client unit specific information includes one or more selected from the group consisting of: the WML or HTML capabilities of the client unit; screen size; hardware terminal type; terminal software; OS name and version; information about the available software (e.g. Browsers); supported script language; installed plug-ins and running applets.
   According to other embodiments a client unit may be realized with code sections having instructions as follows:
22) A client unit for communicating with a server unit of a data communication system for being provided with content data from the server unit, comprising:
   a code section containing instructions to receive a client characteristics exploration request;
   a code section containing instructions to determine client characteristic information in response to said received client characteristics exploration request;
   a code section containing instructions to transmit a client characteristics response message in response to said client characteristics exploration request to the server unit.
23) A client unit according to item 22), further comprising a code section containing instructions to transmit a content data request message requesting the transfer of content data to the client unit; and
   a client unit processor for receiving from the server unit the content data as indicated in the request message and as processed in the server unit in accordance with the client characteristics as contained in the transmitted client characteristics response message.
24) A client unit according to item 22), wherein said client unit is one or more selected from the group consisting of: a JAVA machine or a T-ONLINE client unit.
25) A client unit according to item 22), said client unit is one or more selected from the group consisting of: a personal computer, a mobile UMST telephone, a car navigation system and a laptop computer.
26) A client unit according to item 22), wherein said code section containing instructions to determine client characteristics comprises a code section containing execution instructions to execute an exploration code section containing instructions for an exploration processing program for collecting the client characteristics, wherein said code section containing instructions to transmit said response message contains instructions to transmit said response message including said collected client characteristics to the server unit.
27) A client unit according to item 26), wherein said exploration code section containing instructions for an exploration processing program is a SCRIPT language program sent from the server unit (SERV).
28) A client unit according to item 26), wherein said exploration code section containing instructions for an exploration processing program is a plug-in loaded and run by said client unit in response to a receipt of a corresponding exploration processing program unit execution message from the server unit.
29) A client unit according to item 26), wherein said exploration code section containing instructions for an exploration processing program is an applet triggered by a corresponding exploration processing program unit execution message received from said server unit.
30) A client unit according to item 23), wherein said client side content data requesting unit is an internet browser program or a wireless device.
31) A client unit according to item 22), wherein said client unit (CU) comprise a JAVA-based processing unit (PU).

### INDUSTRIAL APPLICABILITY

As was explained above, the invention is usable in a data communication system in which a server and at least one client unit perform a data communication in order to provide the client unit with characteristic data from the server unit. Although heretofore some references were made to servers and clients implemented in a JAVA environment, it should be noted, that the invention is equally well applicable to any other data communication system in which a main computer and a sub-computer communicate. The invention is also not restricted to the case where the client is a computer and the invention can in particular be used in environments where the client unit is a mobile telephone, such as one which is WAP compatible.

Furthermore, it should be noted that the present invention is not limited to the specific embodiments described herein and that a skilled person can carry out various modifications and variations on the basis of the teachings herein. In particular, the invention can comprise embodiments which result from a combination of features and operations which have been separately described in the claims and in the specification. Therefore, the invention is only defined by the scope of the attached claims.

Reference numerals in the claims only serve clarification purposes and do not delimit the scope of these claims.

## Claims

1. A server unit (SERV) of a data communication system (SYS) in which one or more client units (CU) communicate with the server unit (SERV) for being provided with content data (CD) from the server unit (SERV), comprising:
a client characteristics determination unit (CC-DU) for determining client characteristic information (CCI) about one or more client units (CU) including
an exploration request transmission unit (EXTX) for sending a client characteristics exploration request (CC-RQ) to one or more client units (CU); and
a response message reception unit (EXRC) for receiving a client characteristics response message (CC-RM) which includes client characteristics information (CCI) about the client unit (CU) and is sent by the one or more clients units (CU) in response to the client characteristics exploration request (CC-RQ).

2. A server unit (SERV) according to claim 1,
***wherein***
said client characteristics determination unit (CC-DU) further comprises a client characteristics information (CCI) storage unit (CCI-SM) for storing for said one or more client units (CU) the client characteristics information (CCI) contained in the respective response message (CC-RM).

3. A server unit (SERV) according to claim 1,
***further comprising***
a request message receiving unit (RMRU) for receiving from a client unit (CU) a content data request message (HTTP) requesting the transfer of content data (CD) from the server unit (SERV); and
a content data providing unit (CD-PM) for collecting the content data (CD) as indicated in the request message (HTTP) and for providing said collected content data (CD) processed in accordance with the client characteristics information (CC) to the third unit (CU).

4. A server unit (SERV) according to claim 2,
***further comprising***
a request message receiving unit (RMRU) for receiving from a client unit (CU) a request message (HTTP) requesting the transfer of content data (CD) from the server unit (SERV); and
a content data providing unit (CD-PM) for collecting the content data (CD) as indicated in the request message (HTTP) and for providing said collected content data (CD) processed in accordance with the client characteristics information (CCI) as contained in the client characteristics information (CCI) storage unit (CCI-SM) to said one or more client units (CU).

5. A server unit (SERV) according to claim 1,
***wherein***
said client characteristics determination unit (CC-DU) further includes:
a message (HTTP) analysing unit (RM-AU) for determining client characteristic information (CCI) by analysing a message (HTTP) sent from said one or more client units (CU); wherein
said client characteristics information (CCI) storage unit (CCI-SM) also stores said client characteristics information (CCI) obtained by said message (RM) analysing unit (RM-AU).

6. A server unit (SERV) according to claim 5,
***wherein***
a request message receiving unit (RMRU) is provided for receiving from a client unit (CU) a content data request message (HTTP) requesting the transfer of content data (CD) from the server unit (SERV); and
said message (RM) analysing unit (RM-AU) is adapted to analyse said request message (HTTP).

7. A server unit (SERV) according to claim 1,
***wherein***
said client characteristics exploration request (CC-RQ) contains one or more client exploration parameters (EXP-PARA) indicating the characteristic of the client unit (CU) to be explored wherein said client characteristics response message (CC-RM) contains the client characteristics information (CCI) indicated by said client exploration parameters (EXP-PARA).

8. A server unit (SERV) according to claim 1,
***wherein***
wherein said client characteristics exploration request (CC-RQ) sent to the respective client unit (CU) comprises an exploration processing program unit (EXP-PU; JAVAScript) to be implemented as part of or together with a client-side content data requesting unit (RM) on the client unit side (CU).

9. A server unit (SERV) according to claim 8,
***wherein***
said exploration processing program unit (EXP-PU) is a SCRIPT language program.

10. A server unit (SERV) according to claim 9,
*wherein*
said SCRIPT language program is a JAVAScript program or a VirtualBasicScript program sent from the server unit (SERV) to the client unit (CU) together with content data (CD) in the form of HTTM pages.

11. A server unit (SERV) according to claim 1,
***wherein***
said client characteristics exploration request (CC-RQ) sent to the respective client unit (CU) is an exploration processing program unit execution message (EX-TRG).

12. A server unit (SERV) according to claim 11,
***wherein***
said exploration processing program unit execution message (EX-TRG) indicates as an exploration processing program unit (EX-PP) to be executed a plug-in or an applet on the client unit (CU).

13. A server unit (SERV) according to claim 1,
***wherein***
said data communication system (SYS) is the Internet, and said server unit (SERV) is a server connected to the Internet.

14. A server unit (SERV) according to claim 1,
***wherein***
said data communication system (SYS) is an Intranet connected to Internet, and said server unit (SERV) is a server connected to the Internet through the Intranet.

15. A server unit (SERV) according to claim 1 and 6,
***wherein***
said request message (RM) is a HTTP request message from a browser program of a client unit (CU) to said server unit (SERV).

16. A server unit (SERV) according to claim 6 and 13,
***wherein***
said message (RM) analysing unit (RM-AU) analyses a Header information part of said HTTP request message (URL).

17. A server unit (SERV) according to claim 1,
***wherein***
said client characteristics information (CCI) comprises client-set information set by the client unit (CU) during the running of a content data requesting unit (RM).

18. A server unit (SERV) according to claim 1,
***wherein***
said client characteristics information (CCI) comprises client unit specific information (CU-INFO) representing characteristic information of the processing capabilities of said client unit (CU).

19. A server unit (SERV) according to claim 1,
***wherein***
said server unit (SERV) comprise a JAVA-based processing unit (PU).

20. A server unit (SERV) according to claim 17,
***wherein***
said client-set information (CS-INFO) includes one or more selected from the group consisting of: the set language, the set graphics mode, the sound reception mode, the help mode, the character type and the graphics colour.

21. A server unit (SERV) according to claim 18,
***wherein***
said client unit specific information (CU-INFO) includes one or more selected from the group consisting of: the WML or HTML capabilities of the client unit; screen size; hardware terminal type; terminal software; OS name and version; information about the available software (e.g. Browsers); supported script language; installed plug-ins and running applets.

22. A method for providing content data (CD) from a server unit (SERV) to one or more client units (CU) communicating with the server unit (SERV) through a data communication system (SYS), comprising:
determining (CC-DU) on the server unit (SERV) side client characteristic information (CCI) about one or more client units (CU) by
sending (ST3'') from said server unit (SERV) a client characteristics exploration request (CC-RQ) to one or more client units (CU); and
receiving (ST13'''), in response to the client characteristics exploration request (CC-RQ), at said server unit (SERV) a client characteristics response message (CC-RM) containing the requested client characteristic information (CCI).

23. A method according to claim 21,
***further comprising***
storing (ST13'''') for said one or more client units (CU) the client characteristics information (CCI) contained in the respective response message (CC-RM) in a client characteristics information (CCI) storage unit (CCI-SM).

24. A method according to claim 21,
***further comprising***
receiving (ST2) from a client unit (CU) a request message (HTTP) requesting the transfer of content data (CD) from the server unit (SERV) to a request message receiving unit (RMRU) of said server unit (SERV);
collecting (ST14) at said server unit (SERV) the content data (CD) as indicated in the request message (RM) and processing (ST4') the collected content data in accordance with the client characteristics information (CCI) as contained in the client characteristics information (CCI) storage unit (CCI-SM); and
transmitting (ST5) the processed content data (CD) to said one or more client units (CU).

25. A computer program product stored on a computer readable storage medium comprising code units adapted to carry out on a server side respectively all the steps of claim 21.

26. A program having instructions adapted to carry out at a server side the following steps:
determining (CC-DU) on the server unit (SERV) side client characteristic information (CCI) about one or more client units (CU) by
sending (ST3'') from said server unit (SERV) a characteristics exploration request (CC-RQ) to one or more client units (CU); and
receiving (ST13'''), in response to the client characteristics exploration request (CC-RQ), at said server unit (SERV) from said client unit (CU) a client characteristics response message (CC-RM) containing the determined client characteristic information (CCI).

27. A program according to claim 26,
***further comprising further including*** instructions adapted to carry out the following step:
storing (ST13'''') for said one or more client units (CU) the client characteristics information (CCI) contained in the respective response message (CC-RM) in a client characteristics information (CCI) storage unit (CCI-SM).

28. A program according to claim 26,
***further comprising further including*** instructions adapted to carry out the following steps:
receiving (ST2) from a client unit (CU) a request message (HTTP) requesting the transfer of content data (CD) from the server unit (SERV) to a request message receiving unit (RMRU) of said server unit (SERV);
collecting (ST14) the content data (CD) as indicated in the request message (RM) and processing (ST4') the collected content data in accordance with the client characteristics information (CCI) as contained in the client characteristics information (CCI) storage unit (CCI-SM); and
providing (ST5) the processed content data (CD) to said one or more client units (CU).

29. A data carrier for a server side having computer readable storage code embodied therein which comprises:
a unit (CC-DU) adapted for determining on the server unit (SERV) side client characteristic information (CCI) about one or more client units (CU) including
a unit (EXTX) adapted for sending a client characteristics exploration request (CC-RQ) to one or more client units (CU); and
a unit (EXRC) adapted for receiving a client characteristics response message (CC-RM) which includes client characteristics information (CCI) about the client unit (CU) and is sent by the one or more clients units (CU) in response to the client characteristics exploration request (CC-RQ).

30. A data carrier according to claim 29,
***wherein***
said determining unit (CC-DU) further comprises:
a unit (CCI-SM) adapted for storing for said one or more client units (CU) the client characteristics information (CCI) contained in the respective response message (CC-RM).

31. A data carrier according to claim 29,
***wherein***
said data carrier has further computer readable storage code embodied therein which comprises:
a unit (RMRU) adapted for receiving from a client unit (CU) a request message (HTTP) requesting the transfer of content data (CD) from the server unit (SERV); and
a unit (DC-PM) adapted for collecting the content data (CD) as indicated in the request message (HTTP) and for providing said collected content data (CD) processed in accordance with the client characteristics information (CC).

32. A client unit (CU) for communicating with a server unit (SERV) of a data communication system (SYS) for being provided with content data (CD) from the server unit (SERV), comprising:
a client characteristics exploration request receiving unit (TXRC) for receiving a client characteristics exploration request (CC-RQ);
a client characteristics determination unit (CC-DU) for determining client characteristic information (CCI) in response to said received client characteristics exploration request (CC-RQ);
a response message transmitting unit (TXRC) for transmitting a client characteristics response message (CC-RM) in response to said client characteristics exploration request (CC-RQ) to the server unit (SERV).

33. A client unit (CU) according to claim 32,
***further comprising***
a content data requesting unit (RM) for transmitting a content data request message (HTTP) requesting the transfer of content data (CD) to the client unit (SERV); and
a client unit processing unit (CUPM) for receiving from the server unit (SERV) the content data (CD) as indicated in the request message (RM) and as processed in the server unit (SERV) in accordance with the client characteristics as contained in the transmitted client characteristics response message (CC-RM).

34. A client unit (CU) according to claim 32,
***wherein***
said client unit (SERV) is one or more selected from the group consisting of: a JAVA machine or a T-ONLINE client unit (CU).

35. A client unit (CU) according to claim 32,
***wherein***
said client unit (CU) is one or more selected from the group consisting of: a personal computer, a mobile UMST telephone, a car navigation system and a laptop computer.

36. A client unit (CU) according to claim 32,
***wherein***
said client characteristics determination unit (CC-DU) comprises an exploration processing program execution unit (CU-PU) for an exploration processing program unit (EXP-PU) for collecting the client characteristics,
wherein said response message transmitting unit (TXRC) is adapted for transmitting said client characteristics response message (CC-RM) including said collected client characteristics to the server unit (SERV).

37. A client unit (CU) according to claim 36,
***wherein***
said exploration processing program unit (EXP-PU; JAVAScript) is a SCRIPT language program sent from the server unit (SERV).

38. A client unit (CU) according to claim 36,
***wherein***
said exploration processing program unit (EXP-PU; JAVAScript) is a plug-in loaded and run by said client unit (CU) in response to a receipt of a corresponding exploration processing program unit execution message (EXTR6) from the server unit (SERV).

39. A client unit (CU) according to claim 36,
***wherein***
said exploration processing program unit (EXP-PU; JAVAScript) is an applet triggered by a corresponding exploration processing program unit execution message (EX-TR6) received from said server unit (SERV).

40. A client unit (SERV) according to claim 33,
***wherein***
said client side content data requesting unit (RM) is an internet browser program or a wireless device.

41. A client unit (CU) according to claim 32,
***wherein***
said client unit (CU) comprise a JAVA-based processing unit (PU).

42. A method for providing content data (CD) from a server unit (SERV) to one or more client units (CU) communicating with the server unit (SERV) through a data communication system (SYS), comprising:
receiving on a client unit side (CU) a client characteristics exploration request (CC-RQ);
determining at the client unit (CU) side client characteristic information (CCI) in response to said received client characteristics exploration request (CC-RQ);
transmitting to said server unit (SERV) a client characteristics response message (CC-RM) including the determined client characteristic information (CCI) in response to said client characteristics exploration request (CC-RQ).

43. A method according to claim 42,
***further comprising:***
transmitting a request message (HTTP) requesting the transfer of content data (CD) to the server unit (SERV); and
receiving from the server unit (SERV) the content data (CD) as indicated in the request message (RM) and as processed in the server unit (SERV) in accordance with the client characteristics as contained in the transmitted client characteristics response message (CC-RM).

44. A method according to claim 42,
***wherein***
said determining step includes the step of executing an exploration processing program unit (EXP-PU; JAVAScript) adapted for collecting the client characteristics of the client unit (CU) and transmitting said client characteristics response message (CC-RM) including said client characteristics as collected by said exploration processing program unit (EXP-PU; JAVAScript) to the sever unit (SERV).

45. A method according to claim 44,
***wherein***
said determining step includes the steps of receiving from said server unit (SERV) a SCRIPT language program as said exploration processing program unit (EXP-PU; JAVAScript); and
executing said SCRIPT language program on the client unit (CU) side.

46. A method according to claim 42,
***wherein***
said determining step includes the steps of receiving from said server unit (SERV) an exploration processing program unit (EXP-PU) execution message;
loading in said client unit (CU) a exploration processing program unit (plug-in); and
executing said loaded exploration processing program unit (EXP-PU)on said client unit (CU) triggered by said execution message from the server unit (SERV).

47. A method according to claim 45,
***wherein***
as said exploration processing program unit (EXP-PU; JAVAScript) a JAVAScript or VirtualBasicScript program is run.

48. A method according to claim 46,
***wherein***
as said exploration processing program unit (EXP-PU) a plug-in is executed.

49. A method according to claim 46,
***wherein***
as said exploration processing program unit (EXP-PU) a applet is executed.

50. A computer program product stored on a computer readable storage medium to be executed on a client side comprising code units adapted to carry out respectively all the steps of claim 42.

51. A program having instructions adapted to carry out on a client side the following steps:
receiving on a client unit side (CU) a client characteristics exploration request (CC-RQ);
determining at the client side client characteristic information (CCI) in response to said received client characteristics exploration request (CC-RQ);
transmitting a client characteristics response message (CC-RM) in response to said client characteristics exploration request (CC-RQ).

52. A data carrier for a client side having computer readable storage code embodied therein which comprises:
a unit for receiving on a client unit side (CU) a client characteristics exploration request (CC-RQ);
a unit for determining at the client unit (CU) side client characteristic information (CCI) in response to said received client characteristics exploration request (CC-RQ);
a unit for transmitting a client characteristics response message (CC-RM) in response to said client characteristics exploration request (CC-RQ).

53. A data communication system (SYS) comprising one or more server units (SERV) according to one or more of claims 1-21 and one or more client units (CU).

54. A data communication system (SYS) comprising one or more server units (SERV) and one or more client units (CU) according to one or more of claims 22-41.

55. A data communication system (SYS) comprising one or more server units (SERV) according to one or more of claims 1-21 and one or more client units (CU) according to one or more of claims 22-41.

56. A method for providing content data (CD) from a server unit (SERV) to one or more client units (CU) communicating with the server unit (SERV) through a data communication system (SYS), comprising:
transmitting a request message (HTTP) requesting the transfer of content data (CD) to the server unit (SERV);
receiving (ST2) at the server unit (SERV) from the client unit (CU) said request message (HTTP) requesting the transfer of content data (CD) from the server unit (SERV);
sending (ST3'') from said server unit (SERV) a client characteristics exploration request (CC-RQ) to one or more client units (CU); and
receiving on a client unit side (CU) said client characteristics exploration request (CC-RQ);
determining at the client unit (CU) side client characteristic information (CCI) in response to said received client characteristics exploration request (CC-RQ);
transmitting to said server unit (SERV) a client characteristics response message (CC-RM) including the determined client characteristic information (CCI) in response to said client characteristics exploration request (CC-RQ);
receiving (ST13'''), in response to the client characteristics exploration request (CC-RQ), at said server unit (SERV) the client characteristics response message (CC-RM) containing the requested client characteristic information (CCI);
storing (ST13'''') for said one or more client units (CU) the client characteristics information (CCI) contained in the respective response message (CC-RM) in a client characteristics information (CCI) storage unit (CCI-SM);
collecting (ST14) at said server unit (SERV) the content data (CD) as indicated in the request message (RM) and processing (ST4') the collected content data in accordance with the client characteristics information (CCI) as contained in the client characteristics information (CCI) storage unit (CCI-SM); and
transmitting (ST5) the processed content data (CD) to said one or more client units (CU).
